# FASCICULE DE BREVET EUROPEEN

(11) **EP 3 017 333 B1**
(45) Date de publication et mention de la délivrance du brevet: **16.08.2017**
(21) Numéro de dépôt: 14745208.0
(22) Date de dépôt: 03.07.2014
(51) Int. Cl.: G02B 26/10, G02B 27/01, G02B 27/10

(54) **VISEUR TETE-HAUTE**
HEAD-UP-ANZEIGE
HEAD-UP DISPLAY

(30) Priorité: 04.07.2013 FR 1356555
(43) Date de publication de la demande: 11.05.2016
(73) Titulaire: Commissariat à l'Énergie Atomique et aux Énergies Alternatives, 75015 Paris (FR)
(72) Inventeur: ROSSINI, Umberto, F-38500 Coublevie (FR); GETIN, Stéphane, F-38100 Grenoble (FR)
(74) Mandataire: Thibon, Laurent
(86) Numéro de dépôt international: PCT/FR2014/051712
(87) Numéro de publication internationale: WO 2015/001265

(56) Documents cités:
- EP-A1- 2 570 843
- WO-A2-2005/121707
- DE-A1- 10 344 684
- JP-A- H08 122 737
- JP-A- 2009 163 122

## Description

### Domaine

La présente invention concerne un viseur tête haute, encore appelé afficheur tête haute, collimateur tête haute ou système de visualisation tête haute.

### Exposé de l'art antérieur

Les viseurs tête haute, encore connus sous l'acronyme HUD, de l'anglais Head-Up Display, sont des systèmes d'affichage en réalité augmentée qui permettent d'intégrer une information visuelle sur une scène réelle vue par un observateur. En pratique, de tels systèmes peuvent être placés dans la visière d'un casque, dans le cockpit d'un avion ou au sein de l'habitacle d'un véhicule. Ils sont ainsi positionnés à faible distance des yeux de l'utilisateur, par exemple à quelques centimètres ou dizaines de centimètres.

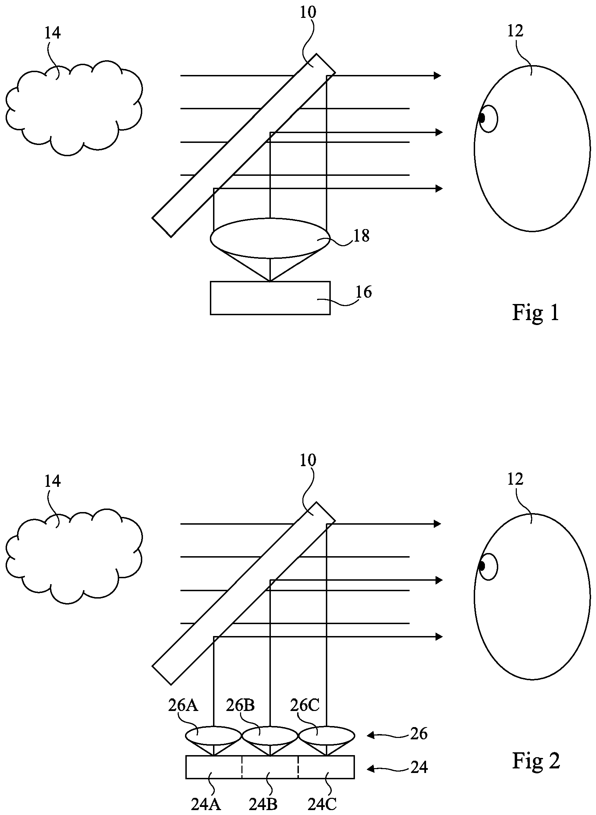

La figure 1 illustre, de façon très schématique, le fonctionnement d'un tel dispositif.

Une lame semi-transparente 10 est placée entre l'oeil de l'utilisateur 12 et une scène à observer 14. Les objets de la scène à observer sont généralement situés à l'infini ou à une distance importante de l'observateur. La lame semi-transparente 10 est par exemple placée selon un angle de 45° par rapport à l'axe entre la scène 14 et l'observateur 12, de façon à transmettre les informations provenant de la scène 14 à destination de l'observateur 12, sans altérer ces informations.

Pour projeter une image à l'infini, comme l'image réelle de la scène, et la superposer à celle-ci, un système de projection est prévu. Ce système comprend un élément d'affichage d'une image 16, par exemple un écran, situé au point focal objet d'un système optique 18. L'image affichée sur l'écran est ainsi collimatée à l'infini par le système optique 18. L'utilisateur n'a pas à faire d'effort d'accommodation, ce qui limite la fatigue visuelle de ce dernier.

Le système de projection est par exemple placé perpendiculairement à l'axe entre la scène et l'observateur de façon que le faisceau issu du système optique 18 atteigne la lame semi-transparente 10 perpendiculairement à cet axe. Le faisceau issu du système optique 18 atteint ainsi la lame semi-transparente 10 avec un angle de 45° par rapport à sa surface.

La lame semi-transparente 10 combine l'image de la scène 14 et l'image issue du système de projection 16-18, d'où il résulte que l'observateur 12 visualise une image comprenant l'image projetée superposée à l'image de la scène 14.

Pour visualiser l'image projetée par le système de projection 16-18, l'oeil de l'observateur doit être placé dans la zone de réflexion du faisceau issu du système optique 18 sur la lame 10. Une contrainte importante à respecter est de tenir compte des mouvements possibles de la tête de l'utilisateur devant le projecteur, et donc de prévoir un faisceau en sortie du système optique 18 le plus large possible. Autrement dit, il faut prévoir un système optique 18 dont la pupille de sortie est de taille importante, comprise par exemple entre quelques centimètres et quelques dizaines de centimètres, pour que les mouvements de tête de l'observateur n'entraînent pas une perte de l'information projetée.

Une autre contrainte des systèmes tête haute est qu'ils doivent être relativement compacts. En effet, des contraintes d'encombrement importantes pèsent sur ces dispositifs, notamment lorsqu'ils sont utilisés dans des cockpits d'avion ou des habitacles automobiles de volume limité. Pour limiter l'encombrement des systèmes tête haute, il faut donc prévoir des dispositifs dont la distance focale est réduite.

Ainsi, on cherche à obtenir des dispositifs présentant une ouverture de sortie faible, l'ouverture de sortie étant définie comme étant le rapport entre la distance focale objet du système et le diamètre de la pupille de sortie du dispositif. Il est connu que la complexité d'un système optique dépend de l'ouverture de sortie de celui-ci. Plus particulièrement, plus l'ouverture d'un dispositif est faible, plus le dispositif est complexe. Plus le système optique est complexe, plus le nombre d'éléments optiques qu'il contient est important, notamment pour limiter les différentes aberrations. Cette augmentation du nombre d'éléments optiques élémentaires augmente le volume et le coût du dispositif complet, ce qui n'est pas souhaité.

En outre, il est nécessaire de prévoir des dispositifs présentant une consommation d'énergie faible et une bonne visibilité de l'image projetée, c'est-à-dire une intensité lumineuse importante.

Un viseur tête haute comprenant une pluralité de dispositifs d'affichage élémentaires est connu du document JP H8 122737 A. Les dispositifs d'affichage à balayage, formant une image intermédiaire sur un diffuseur sont connus. Le document EP 2 570 843 Al divulgue un exemple d'un tel système.

### Résumé

Un mode de réalisation prévoit un viseur tête haute particulièrement compact, peu consommateur d'énergie et assurant une intensité lumineuse importante de l'image projetée.

Ainsi, un mode de réalisation prévoit un viseur tête haute comprenant une pluralité de dispositifs d'affichage élémentaires comprenant chacun une source laser, un miroir mobile, un miroir fixe, un diffuseur et un sous-système optique, la surface du diffuseur étant plus petite que la surface du sous-système optique, et le miroir mobile étant positionné pour dévier le faisceau issu de la source laser en direction du miroir fixe de façon que le faisceau issu du miroir fixe balaye la surface du diffuseur avant d'atteindre le sous-système optique, dans lequel les sources laser et les miroirs mobiles sont positionnés dans un espace défini entre les diffuseurs.

Selon un mode de réalisation, les dispositifs d'affichage élémentaires sont disposés de façon que les sous-systèmes optiques soient jointifs.

Selon un mode de réalisation, dans chaque dispositif d'affichage élémentaire, le diffuseur est placé dans le plan focal objet du sous-système optique.

Selon un mode de réalisation, dans chaque dispositif d'affichage élémentaire, le diffuseur est un diffuseur en réflexion.

Selon un mode de réalisation, dans chaque dispositif d'affichage élémentaire, le diffuseur est un diffuseur en transmission.

Selon un mode de réalisation, chaque dispositif d'affichage élémentaire comprend en outre un réseau de diffraction disposé du côté de la face arrière du diffuseur, ce réseau étant adapté à orienter l'axe central du faisceau de projection du dispositif d'affichage élémentaire en direction du centre du sous-système optique de ce dispositif d'affichage élémentaire.

Selon un mode de réalisation, dans chaque dispositif d'affichage élémentaire, le diffuseur est un diffuseur holographique.

Selon un mode de réalisation, le viseur est destiné à être utilisé par un observateur dont l'oeil est situé à une distance e des sous-systèmes optiques, et présente une boîte à oeil B, et, dans chaque dispositif d'affichage élémentaire, le sous-système optique présente un diamètre Len et une distance focale f, et le diffuseur a une dimension d'approximativement f* (Len+B) /e.

Selon un mode de réalisation, les dispositifs d'affichage élémentaires sont sensiblement identiques, et les diffuseurs voisins sont séparés deux à deux par une distance approximativement égale à Len - f*B/e.

Selon un mode de réalisation, au moins un miroir fixe est commun à plusieurs dispositifs d'affichage élémentaires.

Selon un mode de réalisation, le viseur comprend en outre des éléments d'écran des faisceaux lumineux entre les différents dispositifs d'affichage élémentaires.

Selon un mode de réalisation, le viseur comporte en outre une lentille générale au dessus des dispositifs d'affichage élémentaires.

Selon un mode de réalisation, les miroirs mobiles et fixes sont plans.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, illustre le principe de fonctionnement d'un viseur tête haute ;
la figure 2 illustre un autre viseur tête haute ;
la figure 3 illustre une portion d'un viseur tête haute selon un mode de réalisation ;
la figure 4 illustre une portion d'un viseur tête haute selon une variante d'un mode de réalisation ;
la figure 5 est une vue de dessus d'une portion d'un viseur tête haute selon un mode de réalisation ;
la figure 6 illustre une portion d'un viseur tête haute selon une autre variante de réalisation ; et
les figures 7, 8 et 9 illustrent des exemples de règles géométriques pour la conception d'un viseur tête haute.

Par souci de clarté, de mêmes éléments ont été désignés par de mêmes références aux différentes figures et, de plus, comme cela est habituel dans la représentation des dispositifs optiques, les diverses figures ne sont pas tracées à l'échelle.

### Description détaillée

Pour obtenir un viseur tête haute compact, c'est-à-dire comprenant un système de projection présentant un encombrement inférieur à quelques dizaines de centimètres et présentant une pupille de sortie de taille importante, on peut prévoir de dissocier le système de projection en plusieurs sous-systèmes de projection élémentaires, chaque sous-système de projection fonctionnant de la même façon et projetant une portion d'une image à afficher en superposition d'une image réelle.

La figure 2 représente schématiquement un tel viseur tête haute.

En figure 2, le dispositif comprend une lame semi-transparente 10 qui est placée entre l'observateur 12 et une scène à observer 14. La surface de la lame semi-transparente 10 forme un angle, par exemple de 45°, avec l'axe entre la scène et l'observateur, et ne perturbe pas l'arrivée de rayons de la scène jusqu'à l'observateur. Il est à noter que la lame semi-transparente peut être remplacée par un filtre interférentiel réalisant la même fonction qu'une lame semi-transparente.

Un système de projection d'une image à superposer à l'image de la scène est prévu. Il comprend une source d'images 24, par exemple un écran, associé à un système optique 26. Le système de projection est placé ici perpendiculairement à l'axe entre la scène et l'observateur, et le faisceau qui est issu du système optique 26 atteint la lame semi-transparente 10 perpendiculairement à cet axe.

La lame semi-transparente 10 combine, c'est-à-dire superpose, l'image de la scène 14 et l'image projetée issue du système optique 26, d'où il résulte que l'observateur visualise l'image projetée superposée à l'image réelle de la scène 14. Le système de la figure 2 fonctionne donc de la même façon que le système de la figure 1.

Le système optique 26 comprend un ensemble de sous-systèmes optiques 26A, 26B et 26C de même distance focale objet. La source d'images 24 est placée à une distance du système optique 26 égale à la distance focale objet de chacun des sous-systèmes optiques 26A à 26C.

On appellera ici l'ensemble formé d'un sous-écran (ou d'une source lumineuse) et d'un sous-système optique un sous-projecteur. Le système de projection comporte ainsi une pluralité de sous-projecteurs.

Pour former la source d'image 24, on peut utiliser un écran divisé en plusieurs sous-écrans. Dans la vue en coupe de la figure 2, trois sous-écrans 24A, 24B et 24C sont représentés. Chaque sous-écran 24A, 24B et 24C est associé à un sous-système optique 26A, 26B, 26C. Contrairement à ce qui est représenté, les sous-écrans peuvent être décalés des axes optiques des sous-systèmes optiques associés.

L'écran 24 est prévu de façon que chaque sous-écran 24A, 24B, 24C affiche une partie de l'information, l'information complète étant recombinée par le système optique au niveau de l'oeil de l'observateur. Pour cela, l'image que l'on souhaite projeter en réalité augmentée est divisée en blocs qui sont répartis sur les différents sous-écrans.

En formant plusieurs sous-projecteurs parallèles, on peut obtenir un dispositif complet présentant une pupille de sortie totale (somme des tailles des pupilles de sortie de chacun des sous-projecteurs) de taille importante, tout en formant des sous-systèmes optiques simples et compacts.

En effet, chaque sous-système optique présente une ouverture, dite élémentaire, "modérée". L'ouverture élémentaire d'un sous-système optique est définie comme étant le rapport entre sa distance focale propre et la dimension de sa pupille de sortie propre. L'association en parallèle des sous-projecteurs permet ainsi d'obtenir un système optique dont l'ouverture est particulièrement élevée dans la mesure où, pour une même distance entre écran et optique de projection, on obtient une pupille de sortie totale de taille importante, égale à la somme des pupilles de sortie de chaque sous-système optique. Le système optique présente ainsi une ouverture faible tout en étant formé de structures optiques élémentaires simples d'ouvertures modérées (relativement élevées). La compacité du dispositif complet est ainsi assurée.

Il est courant de former des écrans de projection à l'aide d'une matrice de cellules comprenant des diodes électroluminescentes organiques (en anglais OLED, Organic Light-Emitting Diode) ou encore d'écrans LCD ou cathodiques.

Cependant, ces structures d'écrans ne permettent pas la formation d'images présentant une intensité lumineuse élevée, ce qui peut être important dans des viseurs tête haute. En effet, en utilisation dans des habitacles de voitures ou d'avion, la luminosité extérieure peut être très élevée, ce qui impose la projection d'informations en réalité augmentée avec une forte intensité pour que l'information projetée reste visible. On peut par exemple imposer que la luminosité du dispositif soit de l'ordre de 60 000 cd/m². Une telle intensité lumineuse ne peut être atteinte à l'aide d'écrans OLED, LCD ou cathodiques.

Ainsi, pour assurer la formation d'images présentant des intensités lumineuses importantes, on prévoit ici un viseur tête haute comprenant des sous-projecteurs réalisés non pas à base d'écrans d'affichage lumineux de type écran LCD, écran cathodique, ou écran à LED ou OLED, mais à l'aide d'une source laser balayant un dispositif d'affichage comprenant un diffuseur. Le détail de modes de réalisation sera décrit ci-après.

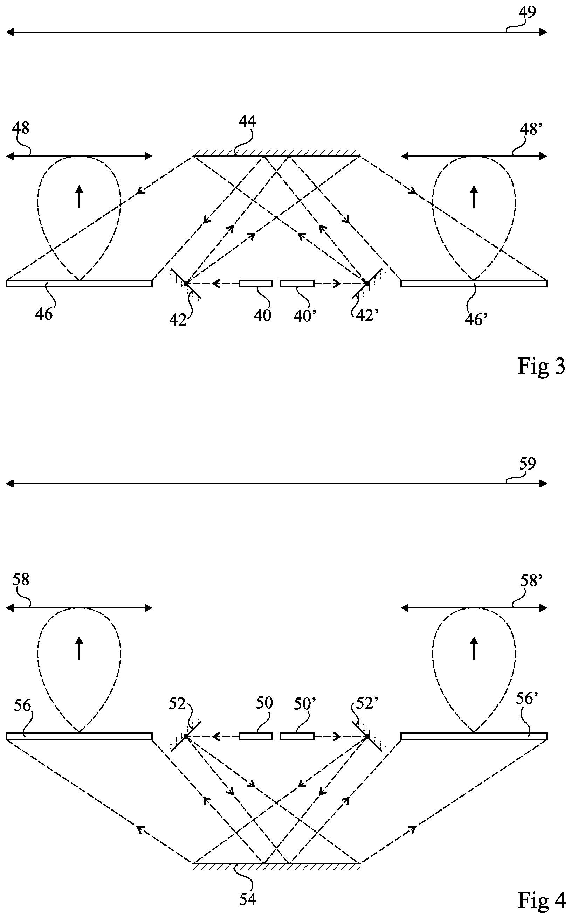

Les figures 3 et 4 illustrent schématiquement des portions de viseurs tête haute selon deux variantes de réalisation. Plus particulièrement, ces deux figures illustrent schématiquement plusieurs sous-projecteurs de viseurs tête haute selon deux modes de réalisation.

Dans la variante de la figure 3, le dispositif comprend au moins deux lasers 40 et 40', ces deux lasers étant placés tête bêche dans le plan de la figure. Les lasers 40 et 40' sont dirigés vers des directions opposées. Un miroir plan et mobile 42 est placé sur le parcours du laser 40 et un miroir plan et mobile 42' est placé sur le parcours du laser 40'. Un miroir plan fixe 44 est placé au-dessus de l'ensemble constitué des lasers 40 et 40', sa face réflectrice étant tournée vers les lasers 40 et 40'.

Le dispositif comprend en outre deux diffuseurs réflectifs 46 et 46', dans l'exemple représentés placés dans le même plan que les lasers 40 et 40' de part et d'autre de ceux-ci. Dans cet exemple, le diffuseur 46 est placé du côté du laser 40 et le diffuseur 46' est placé du côté du laser 40'. Une lentille 48, respectivement 48', est placée au-dessus et en regard du diffuseur 46, respectivement 46'. Les lentilles 48 et 48' peuvent être convexes. Le diffuseur 46 est dans le plan focal de la lentille 48 (ou de l'objectif de sortie, voir ci-après), et le diffuseur 46' est dans le plan focal de la lentille 48' (ou de l'objectif de sortie, voir ci-après).

Les miroirs plans mobiles 42 et 42' sont représentés en figure 3 comme étant placés avec un angle approprié, par exemple de 45°, par rapport à l'axe de projection des lasers 40 et 40' de façon à diriger le faisceau laser vers le haut en figure 3, en direction du miroir plan 44. Dans une position centrale des miroirs mobiles 42 et 42', ces miroirs sont prévus pour dévier chacun des faisceaux issus des lasers 40 et 40' en direction du milieu d'une moitié du miroir 44. Les miroirs 42 et 42' sont montés mobiles, par exemple en rotation autour de deux axes, de façon que le faisceau laser issu de la source 40, respectivement 40', balaye au moins une partie de la surface du miroir 44 (dans l'exemple représenté la moitié de cette surface) et soit réfléchi par le miroir plan 44 pour balayer la surface du diffuseur 46', respectivement 46. Le faisceau est ensuite réfléchi et diffusé par les diffuseurs 46, respectivement 46', en direction de la lentille associée 48, respectivement 48'.

Ainsi, le mouvement du miroir mobile 42, respectivement 42', est prévu de façon que le faisceau laser issu de la source 40, respectivement 40', balaye l'ensemble de la surface du diffuseur en réflexion 46', respectivement 46. Le faisceau laser issu des sources 40 et 40' est configuré de façon à présenter une modulation d'intensité lumineuse en fonction de l'emplacement de projection du laser sur la portion du diffuseur correspondant de façon à définir une portion au moins de l'image à afficher en sortie du dispositif.

Une lentille générale 49 peut être prévue en sortie du dispositif, c'est-à-dire après les lentilles 48 et 48', sur le trajet des faisceaux laser, si cela est nécessaire. Cette lentille générale 49 présente une surface correspondant à l'ensemble des sous-systèmes optiques, et peut être une lame faiblement convexe. Dans le cas où une lentille générale 49 est prévue, les lentilles 48 et 48' forment avec la lentille générale 49 un objectif de sortie, les diffuseurs 46 et 46' étant alors placés dans le plan focal objet de cet objectif. Une lame semi-réfléchissante non représentée, ou un autre dispositif optique assurant la combinaison de l'image réelle à l'image projetée, est en outre placée en regard de l'objectif de sortie pour assurer la fonction du viseur tête haute.

L'ensemble comprenant les lentilles 48, 48' et la lentille générale 49 de sortie du dispositif fournit une image à l'infini à destination d'un observateur des diffuseurs 46 et 46'.

Dans la variante de la figure 4, le dispositif comprend également au moins deux lasers 50 et 50', ces deux lasers étant placés tête bêche dans le plan de la figure. Les lasers 50 et 50' sont dirigés vers des directions opposées. Un miroir plan et mobile 52 est placé sur le parcours du laser 50 et un miroir plan et mobile 52' est placé sur le parcours du laser 50'. Un miroir plan 54 est placé cette fois en dessous de l'ensemble constitué des lasers 50 et 50', sa face réflectrice étant tournée vers les lasers.

Le dispositif comprend en outre deux diffuseurs en transmission 56 et 56', dans l'exemple représentés placés dans le même plan que les lasers 50 et 50' de part et d'autre de ceux-ci. Dans cet exemple, le diffuseur 56 est placé du côté du laser 50 et le diffuseur 56' est placé du côté du laser 50'. Une lentille 58, respectivement 58', est placée au-dessus du diffuseur 56, respectivement 56'. Le diffuseur 56 est dans le plan focal de la lentille 58 (ou de l'objectif de sortie, voir ci-après), et le diffuseur 56' est dans le plan focal de la lentille 58' (ou de l'objectif de sortie, voir ci-après).

Les miroirs plans mobiles 52 et 52' sont représentés en figure 4 comme étant placés avec un angle approprié, par exemple de 45°, par rapport à l'axe de projection des lasers 50 et 50' de façon à diriger le faisceau laser vers le bas en figure 4, en direction du miroir plan 54. Dans une position centrale des miroirs mobiles 52 et 52', ces miroirs sont prévus pour dévier chacun des faisceaux issus des lasers 50 et 50' en direction du milieu d'une partie du miroir 54. Les miroirs 52 et 52' sont montés mobiles, par exemple en rotation autour de deux axes, de façon que le faisceau laser issu de la source 50, respectivement 50', balaye au moins une partie de la surface du miroir 54 (dans l'exemple représenté la moitié de ce miroir 54) et soit réfléchi par le miroir plan 54 pour balayer la surface du diffuseur 56', respectivement 56. Le faisceau est ensuite transmis et diffusé par les diffuseurs en transmission 56, respectivement 56', en direction de la lentille associée 58, respectivement 58'.

Ainsi, le mouvement du miroir mobile 52, respectivement 52', est prévu de façon que le faisceau laser issu de la source 50, respectivement 50', balaye l'ensemble de la surface du diffuseur 56', respectivement 56. Le faisceau laser issu des sources 50 et 50' est configuré de façon à présenter une modulation d'intensité lumineuse en fonction de l'emplacement de projection du laser sur le diffuseur correspondant, de façon à former la portion d'image à afficher en sortie du dispositif.

Les miroirs 52 et 52' (ou 42 et 42' dans l'exemple de la figure 3) sont par exemple réalisés en technologie MEMS (de l'anglais "MicroElectroMechanical Systems" - microsystème électromécanique). La plage ou excursion angulaire de chaque miroir est par exemple d'environ 36 degrés dans chaque sens autour de l'axe de rotation horizontal et d'environ 27 degrés dans chaque sens autour de l'axe de rotation vertical. Il ne s'agit bien entendu là que d'un exemple.

On notera qu'une lentille générale 59 peut être prévue en sortie du dispositif, c'est-à-dire après les lentilles 58 et 58' sur le trajet des faisceaux laser, si cela est nécessaire. Cette lentille générale 59 présente une surface correspondant à l'ensemble des sous-systèmes optiques, et peut être une lame faiblement convexe. Dans le cas où une lentille générale 59 est prévue, les lentilles 58 et 58' forment avec la lentille générale 59 un objectif de sortie, les diffuseurs 56 et 56' étant alors placés dans le plan focal objet de cet objectif. Une lame semi-réfléchissante non représentée, ou un autre dispositif optique assurant la combinaison de l'image réelle à l'image projetée, est en outre placée en regard de l'objectif de sortie pour assurer la fonction du viseur tête haute.

Bien que les modes de réalisation des figures 3 et 4 aient été décrits comme comprenant deux associations, dans un même plan, d'un laser, d'un miroir mobile, d'un miroir fixe, d'un diffuseur et d'une lentille, on pourra bien entendu prévoir des dispositifs comprenant plus ou moins de deux associations de ce type. Notamment, on pourra prévoir des viseurs tête haute dans lesquels des blocs de quatre associations de ce type sont prévus, les lasers étant répartis par exemple régulièrement dans un même plan. Plusieurs blocs comprenant chacun plusieurs associations de ce type pourront également être placés en parallèle pour former un dispositif présentant une ouverture de sortie de dimensions adaptées.

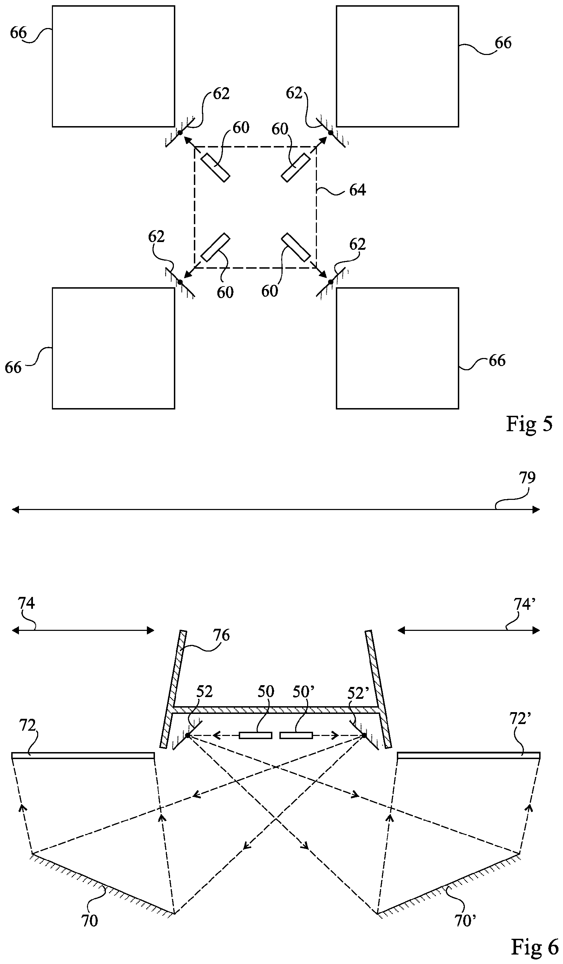

La figure 5 est une vue schématique de dessus illustrant un dispositif comprenant un bloc optique central constitué de quatre lasers associés à quatre systèmes optiques assurant la formation d'une image.

En vue de dessus, le dispositif comprend quatre sources laser 60, chacune dans une direction orthogonale aux deux sources laser voisines. Les faisceaux sont dirigés vers l'extérieur de l'ensemble des sources. Sur le parcours de chaque source laser est prévu un miroir réfléchissant 62 mobile en rotation, permettant la réflexion des faisceaux lasers sur un miroir plan 64, représenté en pointillés et de forme carrée. En vue de dessus, le miroir plan 64 est positionné sensiblement en regard des quatre sources laser 60. Des diffuseurs 66 sont placés, en vue de dessus, à chaque angle du miroir 64. Des lentilles individuelles et générale, positionnées en sortie du viseur tête haute (non représentées en figure 5) peuvent être prévues.

On notera que, dans la vue schématique en vue de dessus de la figure 5, on n'a pas distingué le cas où le miroir 64 est placé au-dessus des lasers (du côté de la sortie optique du viseur tête haute), les diffuseurs 66 étant alors des diffuseurs en réflexion, du cas où le miroir 64 est placé en dessous des lasers, les diffuseurs 66 étant alors des diffuseurs en transmission (les deux variantes des figures 3 et 4).

Avantageusement, l'intégration de blocs comprenant les sources laser ainsi que des miroirs mobiles et fixes entre chaque dispositif d'affichage élémentaire (constitué d'un diffuseur et d'une lentille) assure la formation d'un dispositif particulièrement compact. En outre, l'utilisation de sources laser modulées assure des intensités lumineuses en sortie du viseur adaptées aux applications visées, tout en assurant une consommation d'énergie faible.

La figure 6 illustre un viseur tête haute selon une variante de réalisation. On notera que la variante de la figure 6 est représentée avec des diffuseurs transmissifs, mais que des structures similaires pourront être prévues avec des diffuseurs réflectifs.

Le dispositif de la figure 6 comprend, dans le plan de la figure et comme dans le dispositif de la figure 4, des sources laser 50 et 50' placées tête-bêche et éclairant dans des directions opposées. Un miroir mobile 52 est placé dans le parcours d'éclairement du laser 50 et un miroir mobile 52' est placé dans le parcours d'éclairement du laser 50'. Le miroir mobile 52, placé à gauche du laser 50 dans la figure, dévie le faisceau laser de la source 50 vers le bas et vers la droite, en direction d'un miroir fixe 70' placé sous un diffuseur transmissif 72'. Le miroir mobile 52', placé à droite du laser 50' dans la figure, dévie le faisceau laser de la source 50' vers le bas et vers la gauche, en direction d'un miroir fixe 70 placé sous un diffuseur transmissif 72. Contrairement au cas de la figure 4, les miroirs 70 et 70' sont placés de biais sous les diffuseurs 72 et 72'.

Le miroir 70 est prévu pour dévier le faisceau qu'il reçoit de la source 50' en direction du diffuseur transmissif 72 et le miroir 70' est prévu pour dévier le faisceau qu'il reçoit de la source 50 en direction du diffuseur transmissif 72'. Deux lentilles 74 et 74' sont prévues au-dessus, respectivement, des diffuseurs transmissifs 72 et 72'. La distance séparant la lentille 74, respectivement 74', et le diffuseur transmissif 72, respectivement 72', est égale à la distance focale de la lentille 74, respectivement 74'. Une lentille de sortie générale 79 est également prévue. Les diffuseurs 72 et 72' sont placés dans le plan focal objet de l'objectif constitué des lentilles 74 et 74' et de la lentille générale 79.

Ainsi, la variante de la figure 6 diffère de la variante de la figure 4 en ce que le dispositif ne comprend pas un unique miroir plan 54 mais deux miroirs plans 70 et 70' positionnés de façon à réfléchir le faisceau issu des miroirs mobiles vers les diffuseurs. En outre, comme cela est représenté en figure 6, les diffuseurs 72 et 72' peuvent être placés dans un plan distinct du plan des sources laser 50, 50' et des miroirs mobiles 52, 52'.

En figure 6 est également illustrée une variante de réalisation compatible avec les dispositifs comprenant des diffuseurs réflectifs ou transmissifs des figures 3 et 4. Dans le dispositif de la figure 6 sont prévus des éléments d'écran 76 assurant la séparation des faisceaux issus des différents diffuseurs et des sources laser. En pratique, ces éléments d'écran 76 sont positionnés au-dessus des sources laser et de part et d'autre des diffuseurs. Cette solution permet l'utilisation de diffuseurs présentant des contraintes directionnelles moins importantes que précédemment.

En effet, dans le cas où des parois de délimitation 76 ne sont pas prévues, les diffuseurs doivent être correctement choisis pour ne pas diffuser selon des angles trop importants et en direction de la lentille associée.

On notera que dans les exemples et variantes de réalisation décrits ci-dessus, les choix de diffuseurs transmissifs ou réflectifs pour assurer des angles de diffusion adaptés à la formation du viseur proposé ici sont à la portée de l'homme du métier et ne seront pas décrits en détail ici. Les diffuseurs peuvent être holographiques ou non. A titre d'exemple, les diffuseurs peuvent être constitués d'une lentille de Fresnel sur la face arrière de laquelle est prévu un miroir (diffuseur non holographique) ; une telle structure assure la diffusion de l'information selon un angle prédéterminé par la lentille. A titre de variante, les diffuseurs en transmission peuvent être des diffuseurs commercialisés connus sous l'acronyme LSD (de l'anglais Light Shaping Diffusers) et commercialisés par la société Luminit, ou encore une double matrice à plusieurs lentilles connue sous l'acronyme MLA (de l'anglais Multi Lens Array), par exemple le dispositif connu sous l'acronyme EPE (de l'anglais Exit Pupil Expander) commercialisé par la société Microvision (diffuseur holographique). D'autres structures pourront être utilisées pour former les diffuseurs en réflexion ou en transmission proposés ici. Notamment, des structures limitant la tavelure (en anglais "speckle") peuvent également être prévues dans les diffuseurs ou en surface de ceux-ci. Des structures granuleuses, de façon générale, pourront être utilisées pour former les diffuseurs, la granularité étant adaptée pour contrôler les effets de diffusion. En outre, on pourra également prévoir des diffuseurs dans lesquels sont prévus des hologrammes en volume, par exemple sous la forme de miroirs de Bragg insérés dans l'épaisseur d'une lame. On notera que les diffuseurs actuels assurent de forts taux de réflexion ou de transmission, ce qui assure une faible perte dans les signaux optiques.

Avantageusement, les dispositifs proposés ici peuvent présenter une pupille de sortie de l'ordre de 140 mm tout en conservant une compacité du dispositif (distance selon l'axe optique de sortie du dispositif) maximale de l'ordre de 100 mm. En effet, il existe actuellement des lasers couleur dont l'encombrement ne dépasse pas 1,5 cm³, ce qui assure une intégration dans des volumes réduits. En outre, ces lasers présentent des caractéristiques en termes de consommation d'énergie particulièrement réduites.

A titre d'exemple d'application numérique, la distance entre diffuseurs pourra être de 51,8 mm, les diffuseurs pourront s'étendre sur des dimensions de l'ordre de 31,3 mm, la distance entre les diffuseurs et la lentille principale de sortie du dispositif pourra être de l'ordre de 100 mm et le débattement angulaire des miroirs mobiles peut être de 20°.

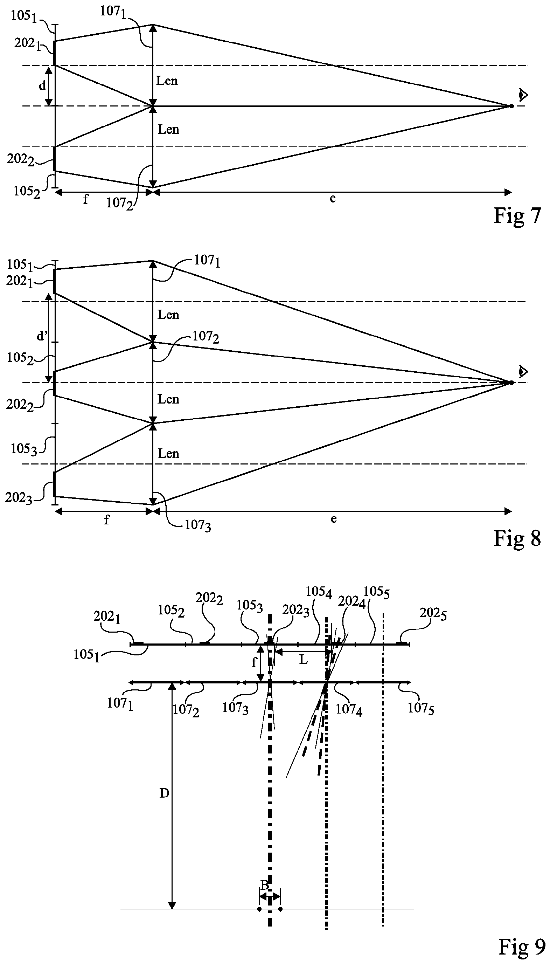

Les figures 7, 8 et 9 illustrent des exemples de règles géométriques permettant de mieux comprendre le fonctionnement d'un dispositif du type décrit en relation avec les figures 3 à 5.

En figure 7, on considère une structure optique comprenant deux sous-écrans 105₁ et 105₂ (par exemple les diffuseurs 46, 46', 56, 56', 66, 72, 72' des exemples des figures 3 à 6) placés dans un même plan, respectivement en regard de sous-systèmes optiques 107₁ et 107₂ (par exemple les lentilles 48, 48', 58, 58', 74, 74' des exemples des figures 3 à 6). Dans cet exemple, les sous-écrans 105₁ et 105₂ sont placés dans le plan focal objet des sous-systèmes optiques 107₁ et 107₂. Les sous-écrans 105₁ et 105₂ et les sous-systèmes optiques 107₁ et 107₂ s'étendent symétriquement de part et d'autre de l'axe optique principal de la structure.

Dans cette figure, le but est de représenter la surface de chaque sous-écran effectivement vue par l'utilisateur lorsque l'axe optique de l'oeil de l'utilisateur coïncide avec l'axe optique principal de la structure, et que l'oeil de l'utilisateur est à une distance e des sous-systèmes optiques 107₁ et 107₂.

Comme cela est représenté en figure 7, seules une portion 202₁ du sous-écran 105₁ et une portion 202₂ du sous-écran 105₂ sont vues par l'oeil de l'observateur. Ainsi, si on considère un observateur dont l'oeil est immobile tel que celui de la figure 7, seules les portions 202₁ et 202₂ des sous-écrans 105₁ et 105₂ sont utiles à l'observation. Le reste des sous-écrans pourrait être désactivé, ou encore les sous-écrans pourraient être réduits à leurs seules portions 202₁ et 202₂ pour une même visibilité de l'information.

Les portions utiles 202₁ et 202₂ des sous-écrans 105₁ et 105₂ ont une dimension approximativement égale à f*Len/e, Len étant le diamètre des sous-systèmes optiques 107₁ et 107₂. Les bords des portions utiles 202₁ et 202₂ des sous-écrans de pixels 105₁ et 105₂ sont situés à une distance d approximativement égale à Len/2 de l'axe optique principal de la structure. La distance bord à bord entre les portions utiles 202₁ et 202₂ des sous-écrans 105₁ et 105₂ est approximativement égale au diamètre Len des sous-systèmes optiques.

En figure 8, on considère une structure comprenant trois sous-écrans 105₁, 105₂ et 105₃, placés dans un même plan, respectivement en regard de sous-systèmes optiques 107₁, 107₂ et 107₃. Dans cet exemple, les sous-ensembles de pixels 105₁, 105₂ et 105₃ sont placés dans le plan focal objet des sous-systèmes optiques 107₁, 107₂ et 107₃. Le sous-afficheur central, formé par le sous-ensemble de pixels 105₂ et le sous-système optique 107₂, a son axe optique confondu avec l'axe optique principal de la structure, et les sous-afficheurs périphériques s'étendent de part et d'autre du sous-afficheur central, symétriquement par rapport à l'axe optique principal de la structure.

On considère le cas où l'axe optique de l'oeil de l'utilisateur coïncide avec l'axe optique principal de la structure, et où l'oeil de l'utilisateur est à une distance e du sous-système optique central 107₂.

Comme cela est représenté en figure 8, seules une portion 202₁ du sous-écran 105₁, une portion 202₂ du sous-écran 105₂, et une portion 202₃ du sous-écran 105₃ sont visibles par l'oeil. Ainsi, si on considère un observateur dont l'oeil est immobile tel que celui de la figure 8, seules les portions 202₁, 202₂ et 202₃ des sous-écrans 105₁, 105₂ et 105₃ sont utiles à l'observation. Le reste des sous-écrans pourrait être désactivé, ou encore les sous-écrans (par exemple des diffuseurs) pourraient être réduits à leurs seules portions 202₁, 202₂ et 202₃ pour une même visibilité de l'information.

Les portions utiles 202₁, 202₂ et 203₃ des sous-écrans 105₁, 105₂ et 105₃ ont une dimension sensiblement égale à f*Len/e, Len étant le diamètre des sous-systèmes optiques 107₁, 107₂ et 107₃. La portion utile 202₂ du sous-afficheur central est centrée sur l'axe optique principal de la structure, et les bords des portions utiles 202₁ et 202₃ des sous-afficheurs périphériques sont situés à une distance d' sensiblement égale à Len + f*Len/2e de l'axe optique principal de la structure. La distance bord à bord entre les portions utiles 202₁ et 202₂ d'une part, et 202₂ et 202₃ d'autre part, est approximativement égale au diamètre Len des sous-systèmes optiques.

Plus généralement, quelle que soit la position d'un sous-afficheur dans un afficheur comprenant un nombre pair ou impair de sous-afficheurs, la portion utile de la source d'images élémentaire de ce sous-afficheur (visible pour une position donnée de l'oeil), a une dimension approximativement égale à f*Len/e.

L'image que l'on souhaite afficher en réalité augmentée peut être divisée en blocs qui sont répartis sur les différents sous-afficheurs en fonction de la position de chaque sous-afficheur par rapport à l'axe optique principal de l'afficheur complet. Les sous-afficheurs en périphérie de l'afficheur sont utiles pour afficher des portions périphériques de l'image, et les sous-afficheurs au centre de l'afficheur sont utiles pour afficher des portions centrales de l'image.

En pratique, pour définir la surface utile de chacun des sous-écrans en fonctionnement, il faut aussi tenir compte du fait que l'oeil de l'utilisateur est susceptible de bouger, selon une amplitude maximale que l'on prédéfinit. On considère ci-après, à titre d'exemple, le cas d'un mouvement exclusivement latéral de l'oeil. Cependant, les enseignements décrits s'appliquent aussi à un mouvement vertical de l'oeil.

On désigne par l'expression "boîte à oeil" ("eye box" en anglais) l'espace dans lequel l'oeil de l'observateur peut bouger tout en recevant l'intégralité de l'information. Le positionnement et la taille des sous-écrans 105ᵢ peuvent être adaptés en fonction d'une boîte à oeil souhaitée prédéfinie. On appellera par la suite B l'amplitude maximale en mouvement de l'oeil acceptée, égale à la taille de la boîte à oeil.

La figure 9 illustre une structure comprenant un nombre Q = 5 de sous-afficheurs comportant chacun un sous-écran (respectivement 105₁, 105₂, 105₃, 105₄ et 105₅) en regard d'un sous-système optique (respectivement 107₁, 107₂, 107₃, 107₄ et 107₅). Chaque sous-écran 105ᵢ a, dans cet exemple, une longueur approximativement égale à Len, et est centré sur l'axe optique du sous-système optique 107ᵢ auquel il est associé. Dans cet exemple, les sous-écrans 105ᵢ sont placés dans le plan focal objet des sous-systèmes optiques 107ᵢ.

Dans le cas d'une boîte à oeil B nulle (le moindre mouvement de la tête de l'observateur implique une perte d'information), on a vu ci-dessus que les portions utiles 202ᵢ des sous-écrans 105ᵢ présentent une longueur approximativement égale à f*Len/e et sont distants bord à bord d'une distance sensiblement égale à Len (les centres des portions utiles 202ᵢ sont ainsi distants d'environ Len + f*Len/e).

Dans le cas d'une boîte à oeil B non nulle, la portion visible de chaque sous-écran 105ᵢ, de dimension f*Len/e, se déplace lorsque l'oeil se déplace dans la boîte à oeil. Sur la figure 9, les traits pleins délimitent la zone du plan focal visible lorsque l'oeil se déplace à gauche dans la figure d'une distance B/2 et les traits en pointillés délimitent la zone du plan focal visible lorsque l'oeil se déplace à droite dans la figure d'une distance B/2. Si on veut voir une image complète quelle que soit la position de l'oeil dans la boîte à oeil, l'image doit être affichée sur des portions des sous-écrans 105ᵢ positionnées et dimensionnées de façon à correspondre au champ de recouvrement des régions visibles aux deux extrémités de la boîte à oeil. Ainsi, les portions "utiles" 202ᵢ des sous-écrans 105ᵢ doivent être agrandies d'une longueur f*B/2e à gauche et d'une longueur f*B/2e à droite par rapport au cas d'une boîte à oeil nulle. En d'autres termes, pour chaque sous-écran 105ᵢ, pour une position donnée de l'oeil dans la boîte à oeil, la portion du sous-écran 105ᵢ visible par l'oeil de l'utilisateur a une dimension de l'ordre de f*Len/e, et, lorsque l'oeil balaye tout l'espace de la boîte à oeil, la portion utile du sous écran 105ᵢ qui est vue (balayée) par l'oeil a une dimension d'approximativement f*Len/e + f*B/e. Pour une même visibilité de l'information, le reste du sous-écran 105ᵢ pourrait être déconnecté, ou encore le sous-écran pourrait être réduit à sa seule portion utile 202ᵢ de longueur f*(Len+B)/e (la distance bord à bord des portions utiles 202ᵢ est alors inférieure à Len).

Dans les modes de réalisation et variantes décrits ci-dessus en relation avec les figures 3 à 6, les diffuseurs sont réduits à leurs seules portions utiles, dont les dimensions sont déterminées selon les règles exposées en relation avec les figures 7 à 9. On tire alors profit de l'espace laissé libre entre les portions utiles des diffuseurs pour placer les sources laser permettant d'afficher l'image.

Plus particulièrement, dans le cadre de l'invention, dans chaque dispositif d'affichage élémentaire comprenant un diffuseur et une lentille, le diffuseur est réduit à sa seule portion utile, et présente ainsi une surface inférieure à la surface de la lentille (la surface du diffuseur étant déterminée selon les règles exposées en relation avec les figures 7 à 9). On tire alors profit de l'espace laissé libre entre les diffuseurs pour disposer, sensiblement dans le même plan que les diffuseurs et/ou dans un plan intermédiaire entre les diffuseurs et les lentilles, des éléments du dispositif de projection d'image, par exemple les sources laser permettant d'afficher l'image et/ou des miroirs du dispositif de projection. Ceci permet notamment de limiter l'encombrement du viseur dans la direction de l'axe optique principal du système de projection d'image.

De préférence, comme cela apparaît sur les figures 7 à 9, les lentilles des différents dispositifs d'affichage élémentaires sont jointives (vu du côté de l'observateur), de façon à obtenir, en sortie du système optique multi-pupillaire, une pupille de sortie continue, équivalente à celle d'un système optique mono-pupillaire du type décrit en relation avec la figure 1. Par "jointives", on entend ici que les lentilles sont juxtaposées, ou séparées par une distance telle que le rapport de la distance inter-lentille sur la distance d'observation soit inférieur à 0,3 mrad. La distance d'observation est par exemple comprise entre 0,5 et 2,5 mètres.

On notera que, dans les modes de réalisation décrits ci-dessus, dans certains dispositifs d'affichage élémentaires, le diffuseur peut être décalé par rapport à la lentille, c'est-à-dire que le centre du diffuseur peut être décalé par rapport à l'axe optique principal de la lentille (comme cela apparaît notamment sur les figures 7 à 9). Avantageusement, dans le cas où le diffuseur est un diffuseur transmissif, on prévoit de disposer, du côté de la face arrière du diffuseur, c'est-à-dire côté source laser, un réseau de diffraction (non représenté), par exemple un réseau blazé ou réseau à échelettes, adapté à réorienter le faisceau de projection d'image en direction de la lentille, avant le passage du faisceau par le diffuseur. Le réseau de diffraction est par exemple adapté à réorienter l'axe central du faisceau de projection du dispositif d'affichage élémentaire en direction du centre de la lentille de ce dispositif d'affichage. L'axe principal du lobe de diffusion en sortie du diffuseur est alors dirigé vers le centre de la lentille, ce qui améliore le rendement lumineux du dispositif. Le réseau de diffraction est par exemple accolé à la face arrière du diffuseur.

Divers modes de réalisation avec diverses variantes ont été décrits ci-dessus. On notera que l'homme de l'art pourra combiner divers éléments de ces divers modes de réalisation et variantes sans faire preuve d'activité inventive.

Notamment, bien que l'on ait décrit ici des miroirs mobiles et fixes plans, des dispositifs similaires pourront être prévus avec des miroirs courbes, par exemple sphériques. Le mouvement des miroirs mobiles sera adapté en conséquence pour obtenir le fonctionnement proposé ici.

En ce qui concerne les miroirs mobiles, de tels miroirs sont disponibles actuellement dans le marché, entrainés par tout type d'actionneur, par exemple un moteur. Le choix de l' actionneur assurant le mouvement du miroir mobile ne sera pas décrit plus en détail ici.

En outre, on a décrit ici des viseurs dans lesquels plusieurs blocs sont prévus, chaque bloc comprenant une source laser, un miroir mobile, un miroir fixe, un diffuseur et une lentille convexe, chaque bloc étant similaire aux blocs voisins. On notera que, si cela est désiré, des blocs distincts pourront être associés dans un même viseur tête haute. On pourra notamment prévoir des lentilles de sortie présentant des distances focales différentes entre les différents blocs, des diffuseurs présentant des dimensions différentes entre les différents blocs, notamment pour compenser des effets qui interviennent entre le centre et la périphérie du viseur ou pour prendre en compte les mouvements possibles des yeux de l'utilisateur devant le viseur.

## Revendications

1. Viseur tête haute, comprenant une pluralité de dispositifs d'affichage élémentaires comprenant chacun une source laser (40, 50, 60), un miroir mobile (42, 52, 62), un miroir fixe (44, 54, 64, 70), un diffuseur (46, 56, 66, 72) et un sous-système optique (48, 58, 74), la surface du diffuseur (46, 56, 66, 72) étant plus petite que la surface du sous-système optique (48, 58, 74), et le miroir mobile étant positionné pour dévier le faisceau issu de la source laser en direction du miroir fixe de façon que le faisceau issu du miroir fixe balaye la surface du diffuseur avant d'atteindre le sous-système optique,
dans lequel les sources laser (40, 50, 50', 60, 60') et les miroirs mobiles (42, 42', 52, 52', 62, 62') sont positionnés dans un espace défini entre les diffuseurs (46, 46', 56, 56', 66, 66', 72, 72').

2. Viseur tête haute selon la revendication 1, dans lequel les dispositifs d'affichage élémentaires sont disposés de façon que les sous-systèmes optiques (48, 48', 58, 58', 74, 74') soient jointifs.

3. Viseur selon la revendication 1 ou 2, dans lequel, dans chaque dispositif d'affichage élémentaire, le diffuseur (46, 56, 66, 72) est placé dans le plan focal objet du sous-système optique (48, 58, 74).

4. Viseur selon l'une quelconque des revendications 1 à 3, dans lequel, dans chaque dispositif d'affichage élémentaire, le diffuseur (46) est un diffuseur en réflexion.

5. Viseur selon l'une quelconque des revendications 1 à 3, dans lequel, dans chaque dispositif d'affichage élémentaire, le diffuseur (56, 72) est un diffuseur en transmission.

6. Viseur selon la revendication 5, dans lequel chaque dispositif d'affichage élémentaire comprend en outre un réseau de diffraction disposé du côté de la face arrière du diffuseur (56, 72), ce réseau étant adapté à orienter l'axe central du faisceau de projection du dispositif d'affichage élémentaire en direction du centre du sous-système optique (48, 58, 74) de ce dispositif d'affichage élémentaire.

7. Viseur selon l'une quelconque des revendications 1 à 6, dans lequel, dans chaque dispositif d'affichage élémentaire, le diffuseur (46, 56, 66, 72) est un diffuseur holographique.

8. Viseur selon l'une quelconque des revendications 1 à 7, destiné à être utilisé par un observateur dont l'oeil est situé à une distance e des sous-systèmes optiques (48, 48' ; 58, 58' ; 74, 74'), et présentant une boîte à oeil B, dans lequel, dans chaque dispositif d'affichage élémentaire, le sous-système optique (48, 48' ; 58, 58' ; 74, 74') présente un diamètre Len et une distance focale f, et le diffuseur (46, 46', 56, 56', 66, 66', 72, 72') a une dimension d'approximativement f*(Len+B)/e.

9. Viseur selon la revendication 8, dans lequel les dispositifs d'affichage élémentaires sont sensiblement identiques, et les diffuseurs (46, 46' ; 56, 56' ; 66, 66' ; 72, 72') voisins sont séparés deux à deux par une distance approximativement égale à Len - f*B/e.

10. Viseur selon l'une quelconque des revendications 1 à 9, dans lequel au moins un miroir fixe (44, 54, 64) est commun à plusieurs dispositifs d'affichage élémentaires.

11. Viseur selon l'une quelconque des revendications 1 à 10, comprenant en outre des éléments d'écran (76) des faisceaux lumineux entre les différents dispositifs d'affichage élémentaires.

12. Viseur selon l'une quelconque des revendications 1 à 11, comportant en outre une lentille générale (49 ; 59 ; 79) au dessus desdits dispositifs d'affichage élémentaires.

13. Viseur selon l'une quelconque des revendications 1 à 12, dans lequel les miroirs mobiles et fixes sont plans.

## Patentansprüche

1. Headup-Display, welches eine Vielzahl von Grund- bzw. Elementaranzeigevorrichtungen aufweist, die jeweils eine Laserquelle (40, 50, 60), einen bewegbaren Spiegel (42, 52, 62), einen festen Spiegel (44, 54, 64, 70), einen Diffusor (46, 56, 66, 72) und ein optisches Untersystem (48, 58, 74) aufweisen, wobei die Oberfläche des Diffusors (46, 56, 66, 72) kleiner ist als die Oberfläche des optischen Untersystems (48, 58, 74), und wobei der bewegbare Spiegel so positioniert ist, dass er den Strahl, der von der Laserquelle ausgeht, zu dem festen Spiegel ablenkt, so dass der Strahl, der von dem festen Spiegel ausgeht, über die Oberfläche des Diffusors scannt bzw. streift, bevor er das optische Untersystem erreicht,
wobei die Laserquellen (40, 50, 50', 60, 60') und die bewegbaren Spiegel (42, 42', 52, 52', 62, 62') in einem Raum positioniert sind, der zwischen den Diffusoren (46, 46', 56, 56', 66, 66', 72, 72') definiert sind.

2. Headup-Display nach Anspruch 1, wobei die Elementaranzeigevorrichtungen so angeordnet sind, dass die optischen Untersysteme (48, 48', 58, 58', 74, 74') anliegend sind.

3. Anzeige nach Anspruch 1 oder 2, wobei der Diffusor (46, 56, 66, 72) in jeder Elementaranzeigevorrichtung in der Objektfokusebene des optischen Untersystems (48, 58, 74) angeordnet ist.

4. Anzeige nach einem der Ansprüche 1 bis 3, wobei der Diffusor (46) in jeder Elementaranzeigevorrichtung ein reflektierender Diffusor ist.

5. Anzeige nach einem der Ansprüche 1 bis 3, wobei der Diffusor (56, 72) in jeder Elementaranzeigevorrichtung ein transmissiver Diffusor ist.

6. Anzeige nach Anspruch 5, wobei jede Elementaranzeigevorrichtung weiter ein Diffraktions- bzw. Beugungsgitter aufweist, welches auf der Oberfläche der Rückseite des Diffusors (56, 72) angeordnet ist, wobei das Gitter fähig ist, die Mittelachse des Projektionsstrahls der Elementaranzeigevorrichtung zur Mitte des optischen Untersystems (48, 58, 74) dieser Elementaranzeigevorrichtung zu orientieren.

7. Anzeige nach einem der Ansprüche 1 bis 6, wobei der Diffusor (46, 56, 66, 72) in jeder Elementaranzeigevorrichtung ein holographischer Diffusor ist.

8. Anzeige nach einem der Ansprüche 1 bis 7, die von einem Beobachter verwendet werden soll, dessen Auge in einer Distanz e von den optischen Untersystemen (48, 48'; 58, 58'; 74, 74') angeordnet ist, und die eine Augenumgrenzung B hat, wobei das optische Untersystem (48, 48'; 58, 58'; 74, 74') in jeder Elementaranzeigevorrichtung einen Durchmesser Len und eine Brennweite f hat, und wobei der Diffusor (46, 46', 56, 56', 66, 66', 72, 72') eine Abmessung von ungefähr f *(Len+B)/e hat.

9. Anzeige nach Anspruch 8, wobei die Elementaranzeigevorrichtungen im Wesentlichen identisch sind und benachbarte Diffusoren (46, 46'; 56, 56'; 66, 66'; 72, 72') zu zwei mal zwei um eine Distanz von ungefähr gleich Len-f*B/e beanstandet sind.

10. Anzeige nach einem der Ansprüche 1 bis 9, wobei zumindest ein fester Spiegel (44, 54, 64) gemeinsam zu einer Vielzahl von Elementaranzeigevorrichtungen gehört.

11. Anzeige nach einem der Ansprüche 1 bis 10, die weiter Schirmelemente (76) für die Lichtstrahlen zwischen den unterschiedlichen Elementaranzeigevorrichtungen aufweist.

12. Anzeige nach einem der Ansprüche 1 bis 11, die weiter eine allgemeine Linse (49; 59; 79) über den Elementaranzeigevorrichtungen aufweist.

13. Anzeige nach einem der Ansprüche 1 bis 12, wobei die bewegbaren und festen Spiegel eben sind.

## Claims

1. A head-up display comprising a plurality of elementary display devices, each comprising a laser source (40, 50, 60), a mobile mirror (42, 52, 62), a fixed mirror (44, 54, 64, 70), a diffuser (46, 56, 66, 72), and an optical sub-system (48, 58, 74), the surface area of the diffuser (46, 56, 66, 72) being smaller than the surface area of the optical sub-system (48, 58, 74), and the mobile mirror being positioned to deviate the beam originating from the laser source towards the fixed mirror so that the beam originating from the fixed mirror scans the surface of the diffuser before reaching the optical sub-system,
wherein the laser sources (40, 50, 50', 60, 60') and the mobile mirrors (42, 42', 52, 52', 62, 62') are positioned in a space defined between the diffusers (46, 46', 56, 56', 66, 66', 72, 72').

2. The head-up display of claim 1, wherein the elementary display devices are arranged so that the optical sub-systems (48, 48', 58, 58', 74, 74') are contiguous.

3. The display of claim 1 or 2, wherein, in each elementary display device, the diffuser (46, 56, 66, 72) is placed in the object focal plane of the optical sub-system (48, 58, 74).

4. The display of any of claims 1 to 3, wherein, in each elementary display device, the diffuser (46) is a reflective diffuser.

5. The display of any of claims 1 to 3, wherein, in each elementary display device, the diffuser (56, 72) is a transmissive diffuser.

6. The display of claim 5, wherein each elementary display device further comprises a diffraction grating arranged on the rear surface side of the diffuser (56, 72), the grating being capable of orienting the central axis of the projection beam of the elementary display device towards the center of the optical sub-system (48, 58, 74) of this elementary display device.

7. The display of any of claims 1 to 6, wherein, in each elementary display device, the diffuser (46, 56, 66, 72) is a holographic diffuser.

8. The display of any of claims 1 to 7, intended to be used by an observer having his/her eye located at a distance e from the optical sub-systems (48, 48'; 58, 58'; 74, 74'), and having an eye box B, wherein, in each elementary display device, the optical sub-system (48, 48'; 58, 58'; 74, 74') has a diameter Len and a focal distance f, and the diffuser (46, 46', 56, 56', 66, 66', 72, 72') has a dimension of approximately f*(Len+B)/e.

9. The display of claim 8, wherein the elementary display devices are substantially identical, and neighboring diffusers (46, 46'; 56, 56'; 66, 66'; 72, 72') are separated two by two by a distance approximately equal to Len - f*B/e.

10. The display of any of claims 1 to 9, wherein at least one fixed mirror (44, 54, 64) is common to a plurality of elementary display devices.

11. The display of any of claims 1 to 10, further comprising screen elements (76) for the light beams between the different elementary display devices.

12. The display of any of claims 1 to 11, further comprising a general lens (49; 59; 79) above said elementary display devices.

13. The display of any of claims 1 to 12, wherein the mobile and fixed mirrors are planar.
